# EUROPEAN PATENT SPECIFICATION

(11) **EP 4 497 683 B1**
(45) Date of publication and mention of the grant of the patent: **28.10.2026**
(21) Application number: 24188705.8
(22) Date of filing: 15.07.2024
(51) Int. Cl.: B64D 11/06, B60N 2/06, B60N 2/08

(54) **AIRCRAFT SEAT WITH DOUBLE SHEAR TRACK FITTING ASSEMBLY**
FLUGZEUGSITZ MIT DOPPELSCHERSCHIENENMONTAGEANORDNUNG
SIÈGE D'AÉRONEF AVEC ENSEMBLE DE FIXATION DE GLISSIÈRE À DOUBLE CISAILLEMENT

(30) Priority: 26.07.2023 US 202318226325
(43) Date of publication of application: 29.01.2025
(73) Proprietor: AMI Industries, Inc., Colorado Springs, CO 80916 (US)
(72) Inventor: HOOVER, Douglas E., Colorado Springs, CO, 80907 (US); PACHECO, Chad R., Colorado Springs, CO, 80917 (US)
(74) Representative: Dehns

(56) References cited:
- US-A- 4 508 385
- US-A1- 2019 308 736
- US-A1- 2022 089 288
- US-A1- 2023 144 561

## Description

### BACKGROUND

Pilot or operator seats for rotorcraft or other aircraft require a robust attachment of the underlying seat base structure to floor tracks set into or otherwise attached to the cockpit or cabin floor. Conventional seat structure approaches employ a single-shear locking pin that pierces through a floor track gripper as well as the floor track itself. However, under sufficiently high loading conditions, e.g., sufficient to warp the cockpit or cabin floor, the locking pin may be bent and dislodged from the floor track, enabling the seat structure to break away from the cockpit floor. US 4508385 A discloses a vehicle track assembly comprising interlinked upper and lower frames. US 2022/089288 A1 discloses a powered sear-base release system. US 2023/144561 A1 discloses a rotorcraft seating assembly.

### SUMMARY

The invention is disclosed in claim 1 Preferred aspects of the invention are disclosed in the dependent claims. In a first aspect, a double-shear secured vehicle seating assembly for a rotorcraft aircraft, or like vehicle/mobile platform is disclosed. In embodiments, the seating assembly includes a seat frame structure. The seat frame structure supports the vehicle seat proper, and attaches to the vehicle floor via floor track grippers attached to the underside of the seat frame structure. Each floor track gripper secures the seat frame structure to floor tracks set into the vehicle floor, e.g., a set of two parallel floor tracks. Each floor track includes a rail extending parallel with the vehicle floor, with evenly spaced holes extending through the rail. Above the rail, the upper portion of the floor track extends parallel to the floor and perpendicular to the rail (e.g., to the left and right of the rail). Each floor track gripper has a base attaching to the seat frame structure and left and right side portions extending below the base, such that the left and right side portions "grip" the upper portion of the floor track by extending around and below the upper portion on each side. The left and right side portions of the floor track gripper each include a hole extending fully through each side portion and alignable to the holes extending through the floor track rail. A locking pin further secures each floor track gripper to the floor track.

In some embodiments, the locking pin is connected to a control lever mounted on the vehicle seat by a cable. For example, the occupant of the seat may articulate the control lever to engage the locking pin (or disengage the locking pin from the engaged state).

In some embodiments, the locking pin is set into a spring-loaded housing and held in the engaged state by compression springs. The occupant of the seat may disengage the locking pin by articulating the control lever to compress the springs and retract the locking pin from the floor track rail hole (and from the opposite-side hole in the floor track gripper) or release the compression springs to drive the locking pin into the engaged position (e.g., fully piercing the rail and the floor track gripper on one side, and partially piercing the floor track gripper on the opposing side).

In some embodiments, when in the engaged state, the locking pin fully pierces the floor track gripper (e.g., the left-side and right-side holes therethrough) in addition to the floor track rail.

In a further aspect, a vehicle operator seating assembly (e.g., for a pilot, co-pilot, or other operator of a rotorcraft, aircraft, or like vehicle or mobile platform) is also disclosed. In embodiments, the operator seating assembly includes an operator seat for accommodating the pilot or operator. For example, the seat may comprise a set of several components, e.g., a seatback and seatpan, or a single-component operator seat. The operator seat is supported, and mounted to a cabin floor of the vehicle, by a seat frame structure that attaches to the cabin floor via floor track grippers attached to the underside of the seat frame structure. Each floor track gripper secures the seat frame structure to floor tracks set into the cabin floor, e.g., a set of two parallel floor tracks. Each floor track includes a rail extending parallel with the cabin floor, with evenly spaced holes extending through the rail. Above the rail, the upper portion of the floor track extends parallel to the floor and perpendicular to the rail (e.g., to the left and right of the rail). Each floor track gripper has a base attaching to the seat frame structure and left and right side portions extending below the base, such that the left and right side portions "grip" the upper portion of the floor track by extending around and below the upper portion on each side. The left and right side portions of the floor track gripper each include a hole extending fully through each side portion and alignable to the holes extending through the floor track rail. A locking pin further secures each floor track gripper to the floor track; when engage, the locking pin extends fully through the hole on one side of the floor track gripper, fully through an aligned hole in the rail, and at least partially through the corresponding hole on the other side of the floor track gripper.

In some embodiments, the locking pin is connected to a control lever mounted on the vehicle seat by a cable. For example, the occupant of the seat may articulate the control lever to engage the locking pin (or disengage the locking pin from the engaged state).

In some embodiments, the locking pin is set into a spring-loaded housing and held in the engaged state by compression springs. The occupant of the seat may disengage the locking pin by articulating the control lever to compress the springs and retract the locking pin from the floor track rail hole (and from the opposite-side hole in the floor track gripper) or release the compression springs to drive the locking pin into the engaged position (e.g., fully piercing the rail and the floor track gripper on one side, and partially piercing the floor track gripper on the opposing side).

In some embodiments, when in the engaged state, the locking pin fully pierces the floor track gripper (e.g., the left-side and right-side holes therethrough) in addition to the floor track rail.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a rear view of a vehicle seat secured to a cabin floor via a double-shear locking assembly according to example embodiments of this disclosure;
FIG. 2 is a cross-section view of the double-shear locking assembly of FIG. 1;
FIG. 3 is an external view of the double-shear locking assembly of FIG. 1; and
FIG. 4 is an isometric view of the double-shear locking assembly of FIG. 1.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein.

Broadly speaking, embodiments of the inventive concepts disclosed herein are directed to a pilot or operator seat for a rotorcraft, aircraft, or other vehicle wherein the seat may be subjected to excessive loading, e.g., associated with an impact event. By securing the seating assembly to the cabin floor tracks via double-shear locking assemblies, the seat is kept intact with the cabin floor during emergency landings and other like impact events, significantly increasing survivability for the seat occupant. For example, the seating assembly includes floor track grippers that "grip" the floor track by extending below an upper portion of the floor track on both sides. The floor track grippers are secured to the floor track by a locking pin that fully pierces the floor track gripper on one side of the floor track rail (in addition to piercing the rail itself) but also pierces the floor track gripper on the other side of the floor track rail, creating the double-shear condition.

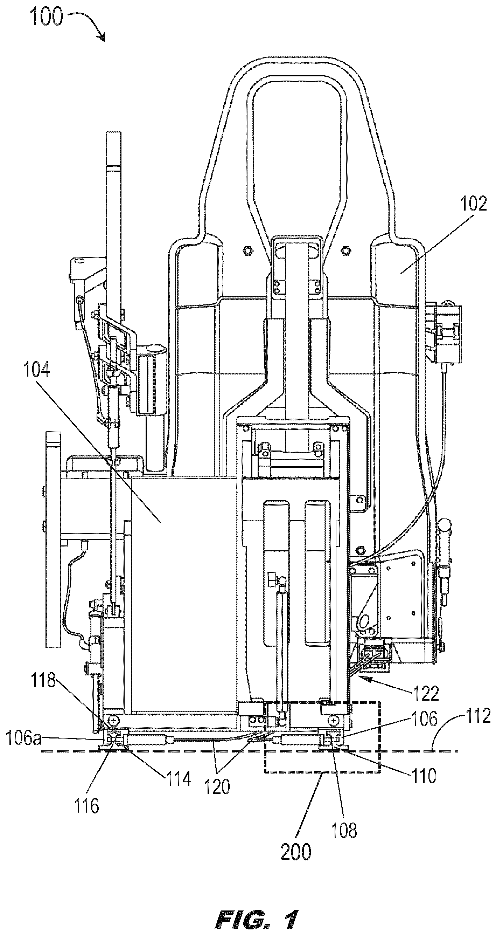

Referring to FIG. 1, a vehicle seating assembly 100 is shown. The vehicle seating assembly 100 may include an operator seat 102, seat structure 104, floor track gripper 106, and double-shear locking pin 108.

In embodiments, the operator seat 102 may accommodate a pilot, co-pilot, crewmember, or other operator of a rotorcraft, aircraft, or like vehicle/mobile platform. For example, the operator seat 102 may include seatpan and seatback components or may combine these elements into a single seat.

In embodiments, the seat structure 104 may support the operator seat 102. For example, the seat structure 104 may be attached to floor tracks 110 set into (or otherwise attached) to a floor 112 of a cockpit or cabin of the vehicle. In some embodiments, the operator seat 102 may be adjustable relative to the seat structure, e.g., via lateral tracking and/or height adjustment.

In embodiments, floor tracks 110 may be set into or attached to the floor 112, e.g., in pairs of parallel floor tracks extending along the cabin floor substantially parallel to a longitudinal axis of the vehicle. For example, each floor track 110 may be bolted or otherwise secured to the cabin floor 112 via a lower portion 114. In embodiments, each floor track 110 may further include a rail 116 extending vertically above the lower portion 114, parallel to the cabin floor 112. Each floor track 110 may still further terminate in an upper portion 118 extending perpendicular to the rail 116 (e.g., substantially horizontally, relative to the rail) to the left and right sides of the rail (e.g., also perpendicular to the floor track, and parallel to the cabin floor 112).

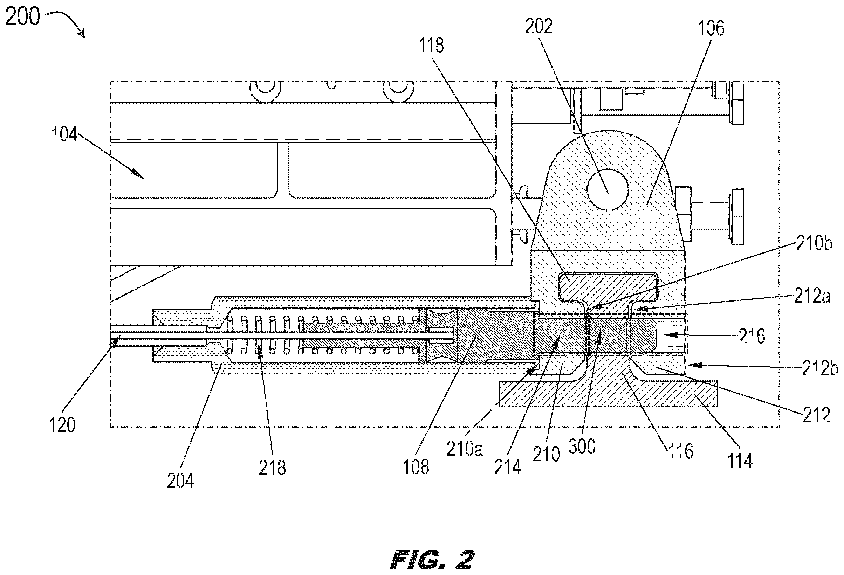

Referring also to FIG. 2, a detailed view 200 of the vehicle seating assembly 100 (in particular, a right-side portion of the seat structure 104) is shown in cross section.

In embodiments, each floor track gripper 106 may be attached to the underside of the seat structure 104 (e.g., via bolt 202). For example, each floor track gripper 106 may be a substantially U-shaped bracket capable of saddling the upper portion 118 of a floor track 110, the floor track gripper including left-side and right-side portions allowing the floor track gripper to "grip" the floor track by extending around and below the upper portion on both the left and right sides of the floor track. Further, the left-side and right-side portions of the floor track gripper 106 may extend below a portion of the rail 116, terminating above the lower portion 114. In embodiments, each floor track gripper 106 may include holes (not shown) in its left-side and right-side portions, the holes alignable with similar holes (not shown) extending laterally through the rail 116 from the left to the right side.

In embodiments, the floor track grippers 106, and thus the seat structure 104, may be secured to the floor tracks 110, and thus to the cabin floor 112, via double-shear locking pins 108 extending through at least three walls of the floor track grippers. For example (and as shown in greater detail below) the locking pins 108 may extend fully through an interior side of the floor track gripper 106 (e.g., the left-side portion of right-side floor track gripper 106, the right-side portion of left-side floor track gripper 106a), fully through the rail 116, and partially through an exterior side of the floor track gripper (e.g., the right-side portion of right-side floor track gripper 106, the left-side portion of left-side floor track gripper 106a). In embodiments, the floor track 110 may operate similarly to a lug and the floor track gripper 106 may operate similarly to a U-shaped bracket saddling the lug, with the double-shear locking pins 108 uniting the floor track gripper to the floor track.

In some embodiments, the locking pins 108 may be situated within a housing 204 and connected (e.g., via cable 120, FIG. 1) to a control lever (122, FIG. 1) articulable by the occupant of the operator seat 102. For example, the locking pins 108 may be engaged or disengaged via the control lever as described below.

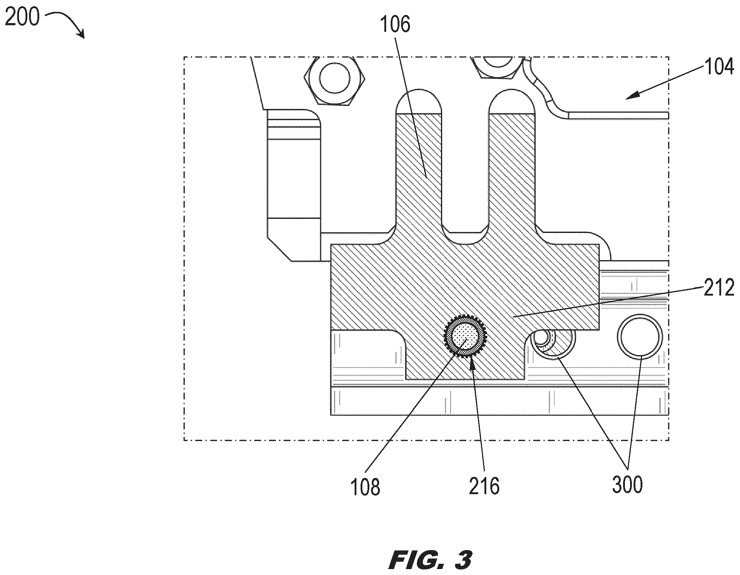

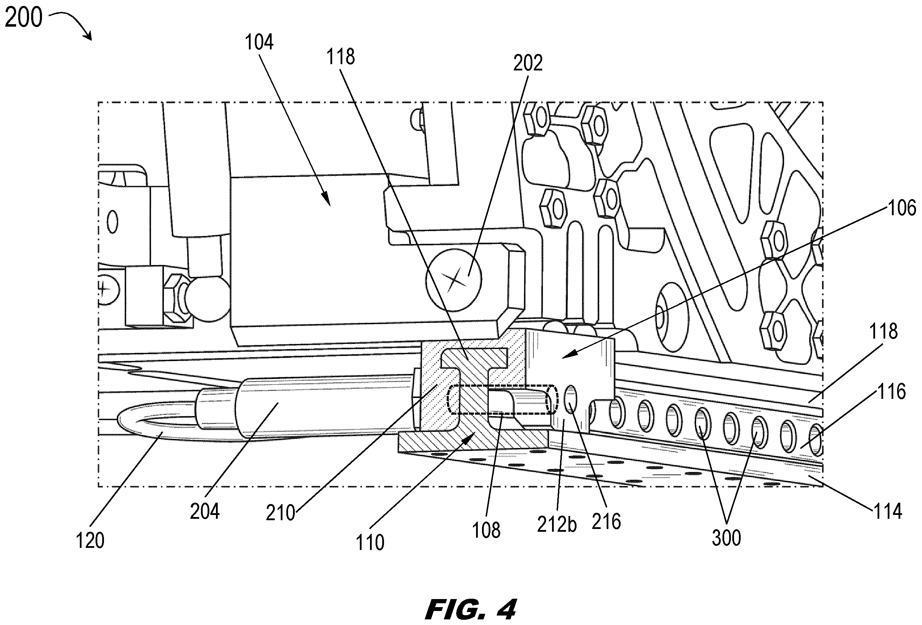

In embodiments, referring in particular to FIG. 2, the floor track gripper 106 may include a left-side portion 210 and right-side portion 212 extending around and below the upper portion 118 of the floor track 110 on both sides of the floor track (as opposed to just the inside/left side of the floor track). For example, referring also to FIGS. 3 and 4, the rail 116 may include a series of evenly spaced holes 300, each hole extending fully through the rail from its left side to its right side.

In embodiments, both the left-side portion 210 and right-side portion 212 of the floor track gripper 106 may include a similarly proportioned hole 214, 216 alignable to each hole 300 extending through the rail 116.

In embodiments, referring back to FIG. 2, the double-shear locking pin 108 may be situated within a housing 204 further including a compression spring 218. For example, the compression spring 218 may be configured to maintain the locking pin 108 in an engaged state, wherein the locking pin pierces at least three walls of the floor track gripper 106, e.g., the outer and inner walls 210a, 210b of the left-side portion 210 and the inner wall 212a of the right-side portion 212 (via holes 214, 300, 216). In some embodiments, the locking pin 108 may be retracted free of the floor track gripper 106 and floor track 110 and into the housing 204, e.g., via the control lever (208, FIG. 1).

Referring also to FIG. 3, the detailed view 200 of the vehicle seating assembly is shown in a side view, e.g., perpendicular to the cross-sectional view of FIG. 2.

Referring also to FIG. 4, the detailed view 200 of the vehicle seating assembly is shown in an isometric view.

In some embodiments, referring in particular to FIGS. 3 and 4, the locking pin 108 may extend substantially fully through the right-side portion 212 of the floor track gripper 106 (e.g., in addition to the left-side portion 210), such that when the locking pin is in the engaged mode, the terminal edge of the locking pin may rest substantially flush with the outer wall 212b of the right-side portion of the floor track gripper. This may have the added benefit of preventing the accumulation of dirt or debris within the otherwise open portion of the hole 216.

Embodiments of the inventive concepts disclosed herein enhance occupant safety by keeping the operator seat intact with the cabin floor in the event of an emergency landing or impact event. For example, under high loading conditions and/or twisting loads a single-shear joint may fail, causing the seat to break away from the cabin floor tracks and putting the occupant at risk of serious injury. The double-shear locking pin reduces the likelihood of the seat breaking loose from the cabin floor tracks.

### CONCLUSION

Although inventive concepts have been described with reference to the embodiments illustrated in the attached drawing figures, substitutions can be made herein without departing from the scope of the claims.
Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A double shear secured vehicle seating assembly (100), comprising:
a seat frame structure (104) capable of supporting a vehicle seat
a floor track (110), and
at least one floor track gripper (106) attached to the seat frame structure, each floor track gripper (106) configured to secure the seat frame structure to the floor track (110) set into a floor (112) of a vehicle,
the floor track (110) including 1) a rail (116) extending parallel to the floor
a plurality of evenly spaced first holes (300) extending through the rail from a left
side to a right side thereof, and 2) an upper portion (118) extending perpendicular
to the rail and parallel to the floor;
each floor track gripper (106) including a left-side portion (210) and a right-side portion (212) extending downward from a base, the base attached to the seat frame structure, the left-side and right-side portions configured to extend around and below the upper portion of the rail on its left and right sides respectively, each of the left-side and right-side portions including a second hole extending fully therethrough in alignment with the plurality of first holes; and
a locking pin (108) configured to secure the floor track gripper (106) to the floor track (110) when in an engaged state, the locking pin (108) extending fully through the left-side second hole, fully through a first hole of the plurality of first holes, and at least partially through the right-side second hole when in the engaged state.

2. The double shear secured vehicle seating assembly of Claim 1, wherein:
the locking pin (108) is connected via at least one cable to a control lever, the control lever articulable by an occupant of the seat to transition the locking pin (108) between the engaged state and a disengaged state.

3. The double shear secured vehicle seating assembly of Claim 2, wherein:
the locking pin (108) is set into a housing and held in the engaged state by at least one spring within the housing;
and
wherein the control lever is configured for:
retracting the locking pin (108) into the housing by compressing the at least one spring;
and
returning the locking pin (108) to the engaged state by releasing the at least one spring.

4. The double shear secured vehicle seating assembly of any preceding Claim, wherein:
the locking pin (108) extends fully through the right-side second hole when in the engaged state.

5. A double shear secured vehicle seating assembly of claim 1, further comprising:
a vehicle seat configured to accommodate an operator of a vehicle.

6. The double shear secured vehicle seating assembly of Claim 5, wherein:
the locking pin (108) is connected via at least one cable to a control lever, the control lever articulable by an occupant of the seat to transition the locking pin (108) between the engaged state and a disengaged state.

7. The double shear secured vehicle seating assembly of Claim 6, wherein:
the locking pin (108) is set into a housing and held in the engaged state by at least one spring within the housing;
and
wherein the control lever is configured for:
retracting the locking pin (108) into the housing by compressing the at least one spring;
and
returning the locking pin (108) to the engaged state by releasing the at least one spring.

8. The double shear secured vehicle seating assembly of any preceding Claims 5-7, wherein:
the locking pin (108) extends fully through the right-side second hole when in the engaged state.

## Patentansprüche

1. Zweischnittig gesicherte Fahrzeugsitzbaugruppe (100), umfassend:
eine Sitzrahmenstruktur (104), die geeignet ist, einen Fahrzeugsitz zu tragen;
eine Bodenschiene (110) und
mindestens einen Bodenschienengreifer (106), der an der Sitzrahmenstruktur befestigt ist, wobei jeder Bodenschienengreifer (106) ausgelegt ist, um die Sitzrahmenstruktur an der in einen Boden (112) eines Fahrzeugs eingesetzten Bodenschiene (110) zu sichern;
die Bodenschiene (110) beinhaltend 1) eine Schienenleiste (116), die sich parallel zu dem Boden erstreckt;
wobei sich eine Vielzahl von gleichmäßig beabstandeten ersten Löchern (300) durch die Schienenleiste von einer linken Seite zu einer rechten Seite davon erstrecken, und 2) einen oberen Abschnitt (118), der sich senkrecht zu der Schienenleiste und parallel zu dem Boden erstreckt;
jeder Bodenschienengreifer (106) beinhaltend einen linksseitigen Abschnitt (210) und einen rechtsseitigen Abschnitt (212), die sich von einer Basis nach unten erstrecken, wobei die Basis an der Sitzrahmenstruktur befestigt ist, wobei der linksseitige und der rechtsseitige Abschnitt ausgelegt sind, um sich um den und unterhalb des oberen Abschnitts der Schienenleiste auf deren linker beziehungsweise rechter Seite zu erstrecken, jeder von dem linksseitigen und dem rechtsseitigen Abschnitt beinhaltend ein zweites Loch, das sich vollständig durch diesen erstreckt, in Ausrichtung mit der Vielzahl von ersten Löchern; und
einen Verriegelungsstift (108), der ausgelegt ist, um, wenn er in einem Eingriffszustand ist, den Bodenschienengreifer (106) an der Bodenschiene (110) zu sichern, wobei sich der Verriegelungsstift (108), wenn er in dem Eingriffszustand ist, vollständig durch das linksseitige zweite Loch, vollständig durch ein erstes Loch der Vielzahl von ersten Löchern und mindestens teilweise durch das rechtsseitige zweite Loch erstreckt.

2. Zweischnittig gesicherte Fahrzeugsitzbaugruppe nach Anspruch 1, wobei:
der Verriegelungsstift (108) über mindestens ein Seil mit einem Betätigungshebel verbunden ist, wobei der Betätigungshebel von einem Insassen des Sitzes gelenkig bewegbar ist, um den Verriegelungsstift (108) zwischen dem Eingriffszustand und einem Zustand außer Eingriff zu überführen.

3. Zweischnittig gesicherte Fahrzeugsitzbaugruppe nach Anspruch 2, wobei:
der Verriegelungsstift (108) in ein Gehäuse eingesetzt ist und durch mindestens eine Feder innerhalb des Gehäuses in dem Eingriffszustand gehalten wird;
und
wobei der Betätigungshebel ausgelegt ist zum:
Zurückziehen des Verriegelungsstifts (108) in das Gehäuse durch Komprimieren der mindestens einen Feder;
und
Zurückführen des Verriegelungsstifts (108) in den Eingriffszustand durch Freigeben der mindestens einen Feder.

4. Zweischnittig gesicherte Fahrzeugsitzbaugruppe nach einem der vorhergehenden Ansprüche, wobei:
der Verriegelungsstift (108) sich vollständig durch das rechtsseitige zweite Loch erstreckt, wenn er sich in dem Eingriffszustand befindet.

5. Zweischnittig gesicherte Fahrzeugsitzbaugruppe nach Anspruch 1, ferner umfassend:
einen Fahrzeugsitz, der ausgelegt ist, um einen Bediener eines Fahrzeugs aufzunehmen.

6. Zweischnittig gesicherte Fahrzeugsitzbaugruppe nach Anspruch 5, wobei:
der Verriegelungsstift (108) über mindestens ein Seil mit einem Betätigungshebel verbunden ist, wobei der Betätigungshebel von einem Insassen des Sitzes gelenkig bewegbar ist, um den Verriegelungsstift (108) zwischen dem Eingriffszustand und einem Zustand außer Eingriff zu überführen.

7. Zweischnittig gesicherte Fahrzeugsitzbaugruppe nach Anspruch 6, wobei:
der Verriegelungsstift (108) in ein Gehäuse eingesetzt ist und durch mindestens eine Feder innerhalb des Gehäuses in dem Eingriffszustand gehalten wird;
und
wobei der Betätigungshebel ausgelegt ist zum:
Zurückziehen des Verriegelungsstifts (108) in das Gehäuse durch Komprimieren der mindestens einen Feder;
und
Zurückführen des Verriegelungsstifts (108) in den Eingriffszustand durch Freigeben der mindestens einen Feder.

8. Zweischnittig gesicherte Fahrzeugsitzbaugruppe nach einem der vorhergehenden Ansprüche 5-7,
wobei:
der Verriegelungsstift (108) sich vollständig durch das rechtsseitige zweite Loch erstreckt, wenn er sich in dem Eingriffszustand befindet.

## Revendications

1. Ensemble de sièges de véhicule sécurisé par double cisaillement (100), comprenant :
une structure de cadre de siège (104) capable de supporter un siège de véhicule ;
une glissière de plancher (110), et
au moins un dispositif de préhension de glissière de plancher (106) fixé à la structure de cadre de siège, chaque dispositif de préhension de glissière de plancher (106) étant configuré pour fixer la structure de cadre de siège à la glissière de plancher (110) intégrée dans un plancher (112) d'un véhicule ;
la glissière de plancher (110) comprenant 1) un rail (116) s'étendant parallèlement au plancher ;
une pluralité de premiers trous régulièrement espacés (300) traversant le rail d'un côté gauche à un côté droit de celui-ci, et 2) une partie supérieure (118) s'étendant perpendiculairement au rail et parallèlement au sol ;
chaque dispositif de préhension de glissière de plancher (106) comprenant une partie côté gauche (210) et une partie côté droit (212) s'étendant vers le bas à partir d'une base, la base étant fixée à la structure de cadre de siège, les parties côté gauche et côté droit étant configurées pour s'étendre autour et sous la partie supérieure du rail sur ses côtés gauche et droit, respectivement, chacune des parties côté gauche et côté droit comprenant un deuxième trou la traversant entièrement et en alignement avec la pluralité de premiers trous ; et
une goupille de verrouillage (108) configurée pour fixer le dispositif de préhension de glissière de plancher (106) à la glissière de plancher (110) lorsqu'elle est en position engagée, la goupille de verrouillage (108) s'étendant entièrement à travers le deuxième trou du côté gauche, entièrement à travers un premier trou de la pluralité de premiers trous, et au moins partiellement à travers le deuxième trou du côté droit lorsqu'elle est en position engagée.

2. L'ensemble de sièges de véhicule sécurisé par double cisaillement selon la revendication 1, dans lequel :
la goupille de verrouillage (108) est reliée par l'intermédiaire d'au moins un câble à un levier de commande, le levier de commande pouvant être actionné par un occupant du siège pour faire passer la goupille de verrouillage (108) entre une position engagée et une position désengagée.

3. L'ensemble de sièges de véhicule sécurisé par double cisaillement selon la revendication 2, dans lequel :
la goupille de verrouillage (108) est placée dans un boîtier et maintenue en position engagée par au moins un ressort à l'intérieur du boîtier ;
et
dans lequel le levier de commande est configuré pour :
rétracter la goupille de verrouillage (108) dans le boîtier en comprimant au moins un ressort ;
et
ramener la goupille de verrouillage (108) en position engagée en relâchant au moins un ressort.

4. L'ensemble de sièges de véhicule sécurisé par double cisaillement selon l'une quelconque des revendications précédentes, dans lequel :
la goupille de verrouillage (108) s'étend entièrement à travers le deuxième trou du côté droit lorsqu'elle est en position engagée.

5. Un ensemble de sièges de véhicule sécurisé par double cisaillement selon la revendication 1, comprenant en outre :
un siège de véhicule configuré pour accueillir un opérateur d'un véhicule.

6. L'ensemble de sièges de véhicule sécurisé par double cisaillement selon la revendication 5, dans lequel :
la goupille de verrouillage (108) est reliée par l'intermédiaire d'au moins un câble à un levier de commande, le levier de commande pouvant être actionné par un occupant du siège pour faire passer la goupille de verrouillage (108) entre une position engagée et une position désengagée.

7. L'ensemble de sièges de véhicule sécurisé par double cisaillement selon la revendication 6, dans lequel :
la goupille de verrouillage (108) est placée dans un boîtier et maintenue en position engagée par au moins un ressort à l'intérieur du boîtier ;
et
dans lequel le levier de commande est configuré pour :
rétracter la goupille de verrouillage (108) dans le boîtier en comprimant au moins un ressort ;
et
ramener la goupille de verrouillage (108) en position engagée en relâchant au moins un ressort.

8. L'ensemble de sièges de véhicule sécurisé par double cisaillement selon l'une quelconque des revendications précédentes 5 à 7,
dans lequel :
la goupille de verrouillage (108) s'étend entièrement à travers le deuxième trou du côté droit lorsqu'elle est en position engagée.
